# EUROPÄISCHE PATENTSCHRIFT

(11) **EP 2 888 488 B1**
(45) Veröffentlichungstag und Bekanntmachung des Hinweises auf die Patenterteilung: **05.10.2016**
(21) Anmeldenummer: 12759034.7
(22) Anmeldetag: 27.08.2012
(51) Int. Cl.: F16B 33/00, F16B 43/00, F16B 5/02

(54) **DICHTUNGSELEMENT**
SEALING ELEMENT
ÉLÉMENT D'ÉTANCHÉITÉ

(43) Veröffentlichungstag der Anmeldung: 01.07.2015
(73) Patentinhaber: EJOT Baubefestigungen GmbH, 57302 Bad Berleburg (DE)
(72) Erfinder: GENS, Lothar, 57319 Bad Berleburg (DE)
(74) Vertreter: Hohgardt, Martin
(86) Internationale Anmeldenummer: PCT/EP2012/066582
(87) Internationale Veröffentlichungsnummer: WO 2014/032690

(56) Entgegenhaltungen:
- FR-A1- 2 402 323
- FR-A5- 2 186 077

## Beschreibung

Die vorliegende Erfindung betrifft ein Dichtungselement zum Abdichten eines Bohrlochs sowie zur Abdichtung der Wandung des Bohrlochs, insbesondere zur Abdichtung von einem Bohrloch, das sich durch mehrere aufeinanderliegende Dachplatten, wie zum Beispiel Faserzementdachplatten, erstreckt. Die vorliegende Erfindung betrifft insbesondere ein Dichtungselement nach dem Oberbegriff des Anspruchs 1. Ein derartiges Dichtungselement ist aus der US 3,962,843 A bekannt.

Das Abdichten von Bohrlöchern mittels Dichtungselementen ist seit Langem bekannt. Im Baubereich werden seit Langem sogenannte Spenglerschrauben zur Abdichtung von seit Langem sogenannte Spenglerschrauben zur Abdichtung von Bohrlöchern verwendet. Eine Spenglerschraube ist ein Befestigungsmittel (z.B. eine Schraube), dessen Kopfende eine Druckscheibe und ein komprimierbares, ringförmiges Dichtungselement aufweist. Wenn das Befestigungsmittel in ein Bohrloch eingeführt wird, legt sich das Dichtungselement auf die Oberfläche des Bohrlochs. Wird anschließend mittels der Druckscheibe Druck auf das Dichtungselement ausgeübt und das Dichtungselement komprimiert, dichtet dieses das Bohrloch ab. Solche Lösungen sind zum Beispiel in unterschiedlichster Form aus FR 2 186 077, US 3,247,752, US 3,910,588 oder US 5,156,509 bekannt.

Bei den bekannten Dichtungselementen, wie sie in Spenglerschrauben zum Einsatz kommen, wird aber nur das Bohrloch abgedeckt und somit nur die bewitterte Seite vor eindringendem Wasser beziehungsweise Feuchtigkeit geschützt. Die bekannten Dichtungselemente verhindern aber nicht, dass Wasser beziehungsweise Feuchtigkeit seitlich in das Bohrloch eindringen kann. Beispielsweise, wenn sich das Bohrloch durch mehrere Dachplatten erstreckt und Spalte zwischen den Platten vorhanden sind, kann durch die Spalte Wasser beziehungsweise Feuchtigkeit in das Bohrloch eindringen. Dadurch kann die Unterkonstruktion in Mitleidenschaft gezogen werden.

Es stellt sich daher die Aufgabe, ein Dichtungselement bereitzustellen, dass die obigen Nachteile nicht aufweist und in der Lage ist, ein Bohrloch nicht nur von der bewitterten Seite vor eindringendem Wasser beziehungsweise Feuchtigkeit zu schützen, sondern auch vor seitlich eindringendem Wasser beziehungsweise Feuchtigkeit. Gleichzeitig stellt sich aber auch die Aufgabe, das Dichtungselement derart auszugestalten, dass es die gleichen Vorteile aufweist, wie die bekannten Lösungen. Das Dichtungselement dem in das Bohrloch einbringbaren Befestigungsmittel also ein gewisses Maß an Bewegungsfreiheit gewährt, so dass keine Kräfte auf die Wandung des Bohrlochs weitergegeben werden. Diese beiden Aufgaben werden erfindungsgemäß durch das Dichtungselement gemäß dem unabhängigen Patentanspruch 1 gelöst.

Das erfindungsgemäße Dichtungselement zum Abdichten eines Bohrlochs für ein darin einbringbares Befestigungsmittel besteht aus einem Dichtungselementkopf und einem am Dichtungselementkopf angeordneten Schaftelement. Dabei ist der Dichtungselementkopf derart ausgestaltet, dass er geeignet ist das Bohrloch zu überdecken und das am Dichtungselementkopf angeordnete Schaftelement ist derart ausgestaltet, dass es bei der Montage in das Bohrloch eingebracht werden kann. Des Weiteren weist das erfindungsgemäße Dichtungselement eine Öffnung auf, die sich durch den Dichtungselementkopf und das Schaftelement erstreckt. Die Öffnung ist dabei derart ausgestaltet, dass sie von ihrer Dimension zu einem in die Öffnung einbringbaren Befestigungsmittel passt.

Das Schaftelement des erfindungsgemäßen Dichtungselements besteht aus zwei Teilen. Der erste Teil des Schaftelements, der näher am Dichtungselementkopf angeordnet ist, ist derart ausgestaltet, dass er im montierten Zustand des Dichtungselements an dem in die Öffnung einbringbaren Befestigungsmittel anliegt, aber nicht an der Wandung des Bohrlochs. Der zweite Teil des Schaftelements, der weiter entfernt von dem Dichtungselementkopf angeordnet ist, ist derart ausgestaltet, dass er im montierten Zustand des Dichtungselements an der Wandung des Bohrlochs anliegt, aber nicht an dem in die Öffnung einbringbaren Befestigungsmittel. Hierdurch wird sichergestellt, dass das Bohrloch, insbesondere wenn es sich durch mehrere Dachplatten erstreckt, gegen eindringendes Wasser beziehungsweise Feuchtigkeit geschützt ist.

Durch die zueinander versetzte Anordnung der beiden Teile des Schaftelements, werden zwischen dem Befestigungsmittel und der Wandung zwei Freiräume gebildet. Ein Freiraum wird gebildet zwischen der Wandung des Bohrlochs und dem ersten Teil des Schaftelements und ein zweiter Freiraum wird zwischen dem in die Öffnung einbringbaren Befestigungsmittel und dem zweiten Teil des Schaftelements gebildet. Durch diese zwei Freiräume wird dem in die Öffnung einbringbaren Befestigungsmittel ein gewisser Grad an Bewegungsfreiheit eingeräumt, ohne dass es die Wandung des Bohrlochs und letztendlich die Dachplatten berührt und gegebenenfalls beschädigt.

Das erfindungsgemäße Dichtungselement stellt somit ein einfaches Mittel zur oberflächigen und seitlichen Abdichtung eines Bohrlochs dar und gewährt gleichzeitig dem in das Bohrloch einbringbaren Befestigungsmittel ein gewisses Maß an Bewegungsfreiheit.

In einer bevorzugten Ausführungsform des erfindungsgemäßen Dichtungselements bestehen der Dichtungselementkopf und das Schaftelement aus einem gummiartigen elastischen Material (z.B. Ethylen-Propylen-Dien-Monomer). Der Einsatz eines gummiartigen elastischen Materials für den Dichtungselementkopf und das Schaftelement erlaubt die Dämpfung der Bewegung des in die Öffnung einbringbaren Befestigungsmittels. Des Weiteren gewährleistet der Einsatz eines gummiartigen elastischen Materials, dass die Verformung des Dichtungselementkopfs und des Schaftelements, welche durch die Bewegung des in die Öffnung einbringbaren Befestigungsmittels hervorgerufen wird, reversibel ist. Außerdem kann durch den Einsatz eines gummiartigen elastischen Materials schon durch die Materialwahl sichergestellt werden, dass sich der zweite Teil des Schaftelements an die Wandung des Bohrlochs drückt. Dabei kann beispielsweise die durch den zweiten Teil des Schaftelements überspannte Fläche größer sein, als die Querschnittsfläche des Bohrlochs, so dass der zweite Teil des Schaftelements zusammengedrückt werden muss, um in das Bohrloch eingebracht zu werden. Bedingt durch das Besterben des Materials in die ursprüngliche Form zurückzukehren, drückt sich der zweite Teil des Schaftelements dann gegen die Wandung des Bohrlochs. Vorzugsweise ist das gummiartige elastische Material auch witterungsfest und UVbeständig, da das erfindungsgemäße Dichtungselement zumeist im Freien eingesetzt wird.

In einer bevorzugten Ausführungsform des erfindungsgemäßen Dichtungselements, ist das Schaftelement derart ausgestaltet, dass es längenanpassbar ist. Dieses kann zum Beispiel hilfreich sein, wenn das Schaftelement länger ist als das Bohrloch. Dabei kann beispielswiese zwischen dem ersten Teil des Schaftelements und dem zweiten Teil des Schaftelements ein Verformungsmittel angeordnet sein. Dabei kann das Verformungsmittel auf unterschiedlichste Weise gebildet werden. Beispielsweise kann das Verformungsmittel ziehharmonikaartig ausgestaltet sein, so dass es bei der Montage zusammengestaucht werden kann. Alternativ kann aber auch der erste Teil des Schaftelements derart ausgestaltet sein, dass der erste Teil des Schaftelements verformt, beispielsweise komprimiert oder gestaucht, werden kann. Dabei kann zum Beispiel der erste Teil des Schaftelements eine höhere Elastizität aufweisen, als der zweite Teil des Schaftelements. Alternativ kann aber auch der zweite Teil des Schaftelements derart ausgestaltet sein, dass der zweite Teil des Schaftelements verformt, beispielsweise komprimiert oder gestaucht, werden kann. Dabei kann zum Beispiel der zweite Teil des Schaftelements eine höhere Elastizität aufweisen, als der erste Teil des Schaftelements. Es können aber auch beide Teile des Schaftelements derart ausgestaltet sein, dass sie beide verformt, beispielsweise komprimiert oder gestaucht, werden können.

In einer weiteren bevorzugten Ausführungsform des erfindungsgemäßen Dichtungselements weist der zweite Teil des Schaftelements radial angeordnete Lamellen auf. Diese dienen dazu, eventuelle Unebenheiten an der Wandung des Bohrlochs auszugleichen und trotzdem noch die volle Dichtwirkung zu erzielen. Dabei drücken sich die Lamellen gegen die Wandung des Bohrlochs und verhindern, dass Wasser beziehungsweise Feuchtigkeit in das Bohrloch eindringen kann. Der zweite Teil des Schaftelements weist außerdem vorzugsweise mehrere unterschiedlich lange Lamellen auf, die sich vorzugsweise über die gesamte Länge des zweiten Teils des Schaftelements erstrecken. Dadurch werden mehrere Dichtpunkte zwischen der Wandung des Bohrlochs und dem zweiten Teil des Schaftelements geschaffen und die Dichtwirkung erhöht.

In einer weiteren bevorzugten Ausführungsform des erfindungsgemäßen Dichtungselements, weist der Dichtungselementkopf, an der das Bohrloch überdeckenden Seite zumindest einen radialen Vorsprung auf. Dieser radiale Vorsprung erhöht zusätzlich die Dichtwirkung des Dichtungselements, insbesondere wenn der Dichtungselementkopf von oben komprimiert wird. Bei der Komprimierung des Dichtungselementkopfs erfährt der radiale Vorsprung einen stärkeren Anpressdruck als der Rest des Dichtungselementkopfs. Des Weiteren können durch umfängliche unterschiedliche Dicken des radialen Vorsprungs, eventuelle Unebenheiten auf der Oberfläche ausgeglichen werden.

In einer weiteren bevorzugten Ausführungsform des erfindungsgemäßen Dichtungselements, weist dieses eine den Dichtungselementkopf im Wesentlichen überspannende Druckscheibe zum Komprimieren des Dichtungselementkopfs auf. Diese Druckscheibe weist vorzugsweise eine Öffnung auf, durch welche sich das in das Bohrloch einbringbare Befestigungsmittel erstreckt. Das Befestigungsmittel weist vorzugsweise Mittel auf, mittels derer Druck auf die Druckscheibe ausgeübt werden kann. Zum Beispiel kann das Befestigungsmittel in der Höhe der Druckscheibe ein Gewinde aufweisen. Wenn dann auf das Gewinde eine Mutter geschraubt wird, kann mit der Mutter ein entsprechender Druck auf die Druckscheibe ausgeübt werden. Zum Beispiel kann aber auch der Kopf des Befestigungsmittels oder ein am Befestigungsmittel angeordneter Bund den Druck auf die Druckscheibe ausüben, wenn das Befestigungsmittel befestigt wird.

In einer weiteren bevorzugten Ausführungsform des erfindungsgemäßen Dichtungselements, ist das Ende des zweiten Teils des Schaftelements, welches am weitesten vom Dichtungselementkopf entfernt ist, derart ausgestaltet, dass es wenn es gegen eine Unterkonstruktion stößt, den Anpressdruck des zweiten Teils des Schaftelements gegen die Wandung des Bohrlochs erhöht. Beispielsweise kann das Ende des zweiten Teils des Schaftelements abgeschrägt sein, wobei sich die Schräge mit weiterem Abstand vom Dichtungselementkopf des Dichtungselements verjüngt. Dieses erhöht nicht nur den Anpressdruck des zweiten Teils des Schaftelements gegen die Wandung des Bohrlochs, wenn dieser gegen eine Unterkonstruktion stößt, sondern erlaubt auch ein einfacheres Einbringen des Schaftelements in das Bohrloch. Des Weiteren kann die Verjüngung des zweiten Teils des Schaftelements korrespondieren mit der Abschrägung des Bohrloches erzeugt durch das Bohrwerkzeug.

Anhand der beigefügten Zeichnungen werden die Ausgestaltung und die Funktionsweise des erfindungsgemäßen Dichtungselements anhand eines Ausführungsbeispiels veranschaulicht. Es zeigen:
- Fig. 1: einen Querschnitt eines Ausführungsbeispiels des erfindungsgemäßen Dichtungselements montiert in drei aufeinanderliegenden Dachplatten;
- Fig. 2: einen Querschnitt des Ausführungsbeispiels des in Figur 1 gezeigten erfindungsgemäßen Dichtungselements montiert in zwei aufeinanderliegenden Dachplatten.

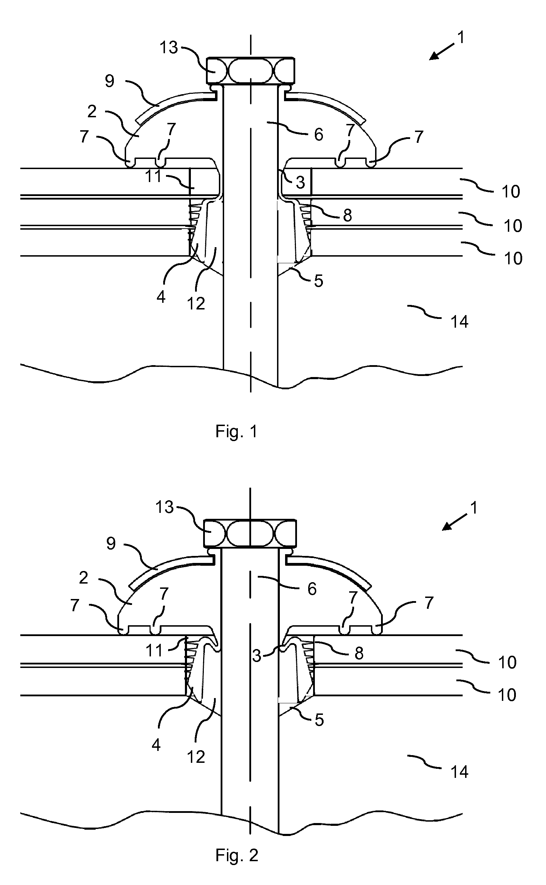

Figur 1 zeigt einen Querschnitt eines Ausführungsbeispiels des erfindungsgemäßen Dichtungselements 1 montiert in drei aufeinanderliegenden Dachplatten 10. Dabei besteht das Dichtungselement 1 selbst aus zwei Teilen, einem Dichtungselementkopf 2 sowie einem daran angeordneten Schaftelement, welches wiederum aus zwei Teilen 3, 4 besteht. Im montierten Zustand deckt der Dichtungselementkopf 2 des Dichtungselements 1 das Bohrloch 5 von oben ab und die zwei Teile 3, 4 des Schaftelements sind in dem Bohrloch 5 angeordnet.

Zur Verstärkung der Dichtwirkung an der bewitterten Seite der Dachplatten 10, weist das in Figur 1 gezeigte Dichtungselement 1 zwei radiale Vorsprünge 7 auf, die an der Unterseite des Dichtungselementkopfs 2 angeordnet sind. Des Weiteren weist das Dichtungselement 1 eine Druckscheibe 9 auf, mittels derer Druck auf den Dichtungselementkopf 2 ausgeübt werden kann, beispielsweise mittels des dargestellten Schraubenkopfes/Bundes oder Mutter 13, welche auf beziehungsweise an dem in das Bohrloch 5 eingebrachten Befestigungsmittel 6 angeordnet ist. Vorzugsweise besteht die Druckscheibe 9 aus einem im Vergleich zum Dichtungselementkopf 2 und Schaftelement 3, 4 unelastischen Material, vorzugsweise einem rostfreien Metall, wie zum Beispiel Edelstahl. Der Dichtungselementkopf 2 und das Schaftelement 3, 4 bestehen vorzugsweise aus einem elastischen Material, beispielsweise einem gummiartigen Material (z.B. Ethylen-Propylen-Dien-Monomer).

Das Schaftelement 3, 4, welches zur Abdichtung der Wandung des Bohrlochs 5 dient, besteht aus zwei Teilen 3, 4, die im montierten Zustand nahezu vollständig im Bohrloch 5 angeordnet sind. Dabei liegt der erste Teil 3 des Schaftelements an dem sich durch die Öffnung im Dichtungselementkopf 2 und im Schaftelement 3, 4 erstreckenden Befestigungsmittel 6 an, aber nicht an der Wandung des Bohrlochs 5. Dadurch wird ein Freiraum 11 zwischen Wandung des Bohrlochs 5 und dem ersten Teil 3 des Schaftelements geschaffen. Dahingegen liegt der zweite Teil 4 des Schaftelements an der Wandung des Bohrlochs 5 an, aber nicht an dem sich durch die Öffnung im Dichtungselementkopf 2 und im Schaftelement 3, 4 erstreckenden Befestigungsmittel 6. Dadurch wird ein Freiraum 12 zwischen dem sich durch die Öffnung im Dichtungselementkopf 2 und Schaftelement 3, 4 erstreckenden Befestigungsmittel 6 und dem zweiten Teil 4 des Schaftelements geschaffen. Die Freiräume 11, 12 erlauben dem sich durch die Öffnung im Dichtungselementkopf 2 und im Schaftelement 3, 4 erstreckenden Befestigungsmittel 6 ein gewisses Maß an seitlicher Bewegungsfreiheit. Die Bewegungsfreiheit des Befestigungsmittels 6 verhindert, dass durch eventuelle seitliche Bewegungen des Befestigungsmittels 6 auftretende Kräfte, auf die Wandung des Bohrlochs 5 und letztendlich auf die Dachplatten 10 übertragen werden.

Zur Erhöhung der Dichtwirkung weist der zweite Teil 4 des Schaftelements Lamellen 8 auf, die sich gegen die Wandung des Bohrlochs 5 drücken. Dadurch wird Wasser beziehungsweise Feuchtigkeit, welches durch die Spalten in den Dachplatten 10 zum Bohrloch 5 gelangen könnte, aufgehalten.

In dem in Figur 1 gezeigten Ausführungsbeispiel, ist der Übergang vom ersten Teil 3 des Schaftelements hin zum zweiten Teil 4 des Schaftelements L-förmig ausgestaltet. In dem gezeigten Ausführungsbeispiel weist dieser Übergang eine hohe Elastizität im Vergleich zu dem Rest der Teile 3, 4 des Schaftelements auf und kann daher einfach verformt werden.

Figur 2 zeigt das gleiche Ausführungsbeispiel des erfindungsgemäßen Dichtungselements 1 wie es in Figur 1 gezeigt ist. Diesmal wurde es aber nicht in drei aufeinanderliegenden Dachplatten 10 sondern nur in zwei aufeinanderliegenden Dachplatten 10 montiert. Die Länge des Schaftelements ist somit größer als die Länge des Bohrlochs 5. In diesem Fall stößt der zweite Teil 4 des Schaftelements im unteren Bereich des Bohrlochs 5 gegen eine Unterkonstruktion 14. Dadurch wird der elastische L-förmige Übergang zwischen dem ersten Teil 3 des Schaftelements und dem zweiten Teil 4 des Schaftelements verformt. Der zweite Teil 4 des Schaftelements wird in diesem Fall in den Freiraum 11 gedrückt, der sich zwischen der Wandung des Bohrlochs 5 und dem ersten Teil 3 des Schaftelements befindet. Alternativ kann der erste Teil 3 des Schaftelements auch derart ausgestaltet sein, dass er sich verformen lässt, um so Platz für den zweiten Teil 4 des Schaftelements zu schaffen. Es können aber auch beide Teile 3, 4 des Schaftelements derart ausgestaltet sein, dass beide Teile 3, 4 des Schaftelements verformt werden können, wenn der zweite Teil 4 des Schaftelements gegen eine Unterkonstruktion 14 stößt. Alternativ kann aber auch nur der zweite Teil 4 des Schaftelements derart ausgestaltet sein, dass er sich verformen lässt. Darüberhinaus können aber auch zwischen dem ersten Teil 3 des Schaftelements und dem zweiten Teil 4 des Schaftelements ein zusätzliches Verformungsmittel vorgesehen sein, das verformt wird, wenn der zweite Teil 4 des Schaftelements gegen eine Unterkonstruktion 14 stößt.

Die an dem zweiten Teil 4 des Schaltelementes befindlichen Lamellen 8 sind vorzugsweise derart ausgestaltet, dass sie die Wandung des Bohrlochs 5 kontaktieren, um das Bohrloch 5 abzudichten. Die Lamellen 8 sorgen auch dafür, dass der zweite Teil 4 des Schaftelements nicht vollflächig die Wandung des Bohrlochs 5 kontaktiert. Dies ist besonders dann vorteilhaft, wenn es zu einer seitlichen Bewegung des Befestigungsmittels 6 kommt. Bei einer solchen Bewegung des Befestigungsmittels 6 werden nämlich zunächst die punktuell die Wandung des Bohrlochs 5 kontaktierenden Lamellen 8 zusammengedrückt, bevor es zu einer vollflächigen Kontaktierung kommt und Kräfte auf die Wandung des Bohrlochs 5 übertragen werden. Des Weiteren erhöhen die Lamellen 8 die Dämpfungswirkung des Dichtungselements 1 in Bezug auf das in die Öffnung einbringbare Befestigungsmittel 6.

Zur Vereinfachung der Montage des Dichtungselements 1 können an dem Befestigungsmittel 6 zusätzliche Hilfselemente (hier nicht gezeigt) angebracht sein (z.B. Flügel), die das einfache und schnelle Aufbohren/Aufreiben des Bohrlochs 5 auf das gewünschte Maß des Dichtungselements 1 noch während der Montage übernehmen können. Dabei kann das Dichtungselement 1 beispielsweise bereits direkt auf das Befestigungsmittel 6 aufgebracht sein, um einen weiteren Arbeitsschritt zu sparen.

## Patentansprüche

1. Ein Dichtungselement (1) zum Abdichten eines Bohrlochs (5) für ein darin einbringbares Befestigungsmittel (6), das Dichtungselement (1) weist auf:
einen Dichtungselementkopf (2) ausgestaltet zum Überdecken des Bohrlochs (5);
ein am Dichtungselementkopf (2) angeordnetes Schaftelement (3, 4) ausgestaltet zum Einbringen in das Bohrloch (5);
eine Öffnung, die sich durch den Dichtungselementkopf (2) und das Schaftelement (3, 4) erstreckt;
das Schaftelement (3, 4) aus zwei Teilen besteht, wobei
der erste Teil (3) des Schaftelements, der näher am Dichtungselementkopf (2) angeordnet ist, derart ausgestaltet ist, dass dieser im montierten Zustand an einem in die Öffnung einbringbaren Befestigungsmittel (6) anliegt, aber nicht an der Wandung des Bohrlochs (5);
der zweite Teil (4) des Schaftelements, der weiter entfernt von dem Dichtungselementkopf (2) angeordnet ist, derart ausgestaltet ist, dass dieser im montierten Zustand nicht an einem in die Öffnung einbringbaren Befestigungsmittel (6) anliegt, und
der erste Teil (3) und der zweite Teil (4) des Schaftelements im montierten Zustand nahezu vollständig im Bohrloch (5) angeordnet sind,
***dadurch gekennzeichnet, dass***
der zweite Teil (4) des Schaftelements radial angeordnete Lamellen (8) aufweist, die derart ausgestaltet sind, dass diese im montierten Zustand an der Wandung des Bohrlochs (5) anliegen.

2. Das Dichtungselement (1) nach Anspruch 1, wobei das Schaftelement (3, 4) derart ausgestaltet, dass dieses längenanpassbar ist.

3. Das Dichtungselement (1) nach Anspruch 2, wobei zwischen dem ersten Teil (3) des Schaftelements und dem zweiten Teil (4) des Schaftelements ein Verformungsmittel angeordnet ist.

4. Das Dichtungselement (1) nach Anspruch 2, wobei der erste Teil (3) des Schaftelements derart ausgestaltet ist, dass dieser verformt werden kann.

5. Das Dichtungselement (1) nach Anspruch 4, wobei der erste Teil (3) des Schaftelements zumindest in einem Abschnitt eine höhere Elastizität aufweist, als der zweite Teil (4) des Schaftelements.

6. Das Dichtungselement (1) nach Anspruch 2, wobei der zweite Teil (4) des Schaftelements derart ausgestaltet ist, dass dieser verformt werden kann.

7. Das Dichtungselement (1) nach Anspruch 6, wobei der zweite Teil (4) des Schaftelements zumindest in einem Abschnitt eine höhere Elastizität aufweist, als der erste Teil (3) des Schaftelements.

8. Das Dichtungselement (1) nach einem der vorhergehenden Ansprüche, wobei der Dichtungselementkopf (2) an der das Bohrloch (5) überdeckenden Seite zumindest einen radialen Vorsprung (7) aufweist.

9. Das Dichtungselement (1) nach einem der vorhergehenden Ansprüche, wobei der Dichtungselementkopf (2) eine Druckscheibe (9) zum Komprimieren des Dichtungselementkopfs (2) aufweist.

## Claims

1. A sealing element (1) for sealing a drill-hole (5) for a therein introducible fastening means (6), the sealing element (1) comprises:
a sealing element head (2) adapted for covering the drill-hole (5);
a shaft element (3, 4) arranged at the sealing element head (2) adapted for introduction into the drill-hole (5);
an opening, which extends through the sealing element head (2) and the shaft element (3, 4);
the shaft element (3, 4) consists of two parts, wherein
the first part (3) of the shaft element, which is arranged closer to the sealing element head (2) is adapted in such a way that in assembled condition it fits closely to a fastening means (6) introducible into the opening but not to the wall of the drill-hole (5);
the second part (4) of the shaft element, which is arranged further away from the sealing element head (2) is adapted in such a way that in assembled condition it does not fit closely to a fastening means (6) introducible into the opening,
and
the first part (3) and the second part (4) of the shaft element in assembled condition are arranged almost fully inside the drill-hole (5),
**characterized in that**
the second part (4) of the shaft element comprises radially arranged lamellas (8), which are adapted in such a way that in assembled condition they fit closely to the wall of the drill-hole (5).

2. The sealing element (1) of claim 1, wherein the shaft element (3, 4) is adapted in such a way that it is length adaptable.

3. The sealing element (1) of claim 2, wherein between the first part (3) of the shaft element and the second part (4) of the shaft element a deformation means is arranged.

4. The sealing element (1) of claim 2, wherein the first part (3) of the shaft element is adapted in such a way that it can be deformed.

5. The sealing element (1) of claim 4, wherein the first part (3) of the shaft element in at least one section comprises a higher elasticity than the second part (4) of the shaft element.

6. The sealing element (1) of claim 2, wherein the second part (4) of the shaft element is adapted in such a way that it can be deformed.

7. The sealing element (1) of claim 6, wherein the second part (4) of the shaft element in at least one section comprises a higher elasticity than the first part (3) of the shaft element.

8. The sealing element (1) of one of the preceding claims, wherein the sealing element head (2) at the side where it covers the drill-hole (5) comprises at least one radial protrusion (7).

9. The sealing element (1) of one of the preceding claims, wherein the sealing element head (2) comprises a pressure disc (9) for compressing the sealing element head (2).

## Revendications

1. Elément d'étanchéité (1) pour étanchéifier un trou percé (5) pour un moyen de fixation (6) pouvant y être introduit, lequel élément d'étanchéité (1) présente :
une tête d'élément d'étanchéité (2) configurée pour recouvrir le trou percé (5) ;
un élément de tige (3, 4) disposé au niveau de la tête d'élément d'étanchéité (2), configuré pour être introduit dans le trou percé (5) ;
une ouverture, qui s'étend à travers la tête d'élément d'étanchéité (2) et l'élément de tige (3, 4) ; l'élément de tige (3, 4) étant constitué de deux parties,
dans lequel
la première partie (3) de l'élément de tige, qui est disposée davantage à proximité de la tête d'élément d'étanchéité (2), est configurée de telle manière qu'elle repose, dans l'état monté, au niveau d'un moyen de fixation (6) pouvant être introduit dans l'ouverture, mais pas au niveau de la paroi du trou percé (5) ; la seconde partie (4) de l'élément de tige, qui est disposée de manière plus éloignée de la tête d'élément d'étanchéité (2), est configurée de telle manière qu'elle ne repose pas, dans l'état monté au niveau du moyen de fixation (6) pouvant être introduit dans l'ouverture, et
la première partie (3) et la deuxième partie (4) de l'élément de tige sont disposées, dans l'état monté, quasiment totalement dans le trou percé (5),
**caractérisé en ce**
**que** la seconde partie (4) de l'élément de tige présente des lamelles (8) disposées de manière radiale, qui sont configurées de telle manière qu'elles reposent, dans l'état monté, au niveau de la paroi du trou percé (5).

2. Elément d'étanchéité (1) selon la revendication 1, dans lequel l'élément de tige (3, 4) est configuré de telle manière qu'il peut être adapté en longueur.

3. Elément d'étanchéité (1) selon la revendication 2, dans lequel un moyen de déformation est disposé entre la première partie (3) de l'élément de tige et la seconde partie (4) de l'élément de tige.

4. Elément d'étanchéité (1) selon la revendication 2, dans lequel la première partie (3) de l'élément de tige est configurée de telle manière qu'elle peut être déformée.

5. Elément d'étanchéité (1) selon la revendication 4, dans lequel la première partie (3) de l'élément de tige présente, au moins dans une section, une élasticité plus importante que la seconde partie (4) de l'élément de tige.

6. Elément d'étanchéité (1) selon la revendication 2, dans lequel la seconde partie (4) de l'élément de tige est configurée de telle manière qu'elle peut être déformée.

7. Elément d'étanchéité (1) selon la revendication 6, dans lequel la seconde partie (4) de l'élément de tige présente, au moins dans une section, une élasticité plus importante que la première partie (3) de l'élément de tige.

8. Elément d'étanchéité (1) selon l'une quelconque des revendications précédentes, dans lequel la tête d'élément d'étanchéité (2) présente, au niveau du côté recouvrant le trou percé (5), au moins une partie faisant saillie (7) radiale.

9. Elément d'étanchéité (1) selon l'une quelconque des revendications précédentes, dans lequel la tête d'élément d'étanchéité (2) présente une rondelle de pression (9) pour comprimer la tête d'élément d'étanchéité (2).
